# FASCICULE DE BREVET EUROPEEN

(11) **EP 4 198 459 B1**
(45) Date de publication et mention de la délivrance du brevet: **04.12.2024**
(21) Numéro de dépôt: 22206421.4
(22) Date de dépôt: 09.11.2022
(51) Int. Cl.: G01D 5/244, G01D 11/30, G01D 18/00

(54) **DISPOSITIF DE MESURE DE POSITION POUR UNITÉ DE STATOR DE MACHINE ÉLECTRIQUE TOURNANTE**
POSITIONSMESSEINRICHTUNG FÜR STATOREINHEIT EINER ROTIERENDEN ELEKTRISCHEN MASCHINE
POSITION MEASUREMENT DEVICE FOR STATOR UNIT OF ROTATING ELECTRIC MACHINE

(30) Priorité: 17.12.2021 FR 2113854
(43) Date de publication de la demande: 21.06.2023
(73) Titulaire: Valeo Electrification, 95800 Cergy (FR)
(72) Inventeur: HAMDI, Rachid, 38070 St Quentin Fallavier (FR)
(74) Mandataire: Valeo Powertrain Systems

(56) Documents cités:
- FR-A1- 3 051 999
- FR-A1- 3 108 974

## Description

### Domaine technique

La présente invention concerne un dispositif de mesure de position pour unité de stator de machine électrique tournante, une unité de stator comprenant un tel dispositif de mesure de position et une machine électrique tournante comprenant cette unité de stator. La présence invention concerne également un outil de calibrage pour un tel dispositif de mesure de position ainsi qu'un procédé de calibrage d'un tel dispositif de mesure de position avec un outil de calibrage.

L'invention se rapporte notamment au domaine des machines électriques tournantes telles que les moteurs électriques, les alternateurs, ou les alterno-démarreurs pour les véhicules automobiles.

### Arrière-plan technologique

Il est connu des documents FR3108974 et FR3051999 des dispositifs de mesure de position pour une unité de stator d'une machine électrique tournante.

Les machines électriques tournantes comprennent une unité de stator comportant un stator muni d'au moins un bobinage en cuivre. Les machines électriques tournantes comprennent également un rotor monté en rotation dans l'unité de stator et par rapport à celle-ci. L'unité de stator comprend un carter entourant et protégeant le stator.

La machine électrique comprend un dispositif de mesure de position comportant un compartiment de capteur destiné à loger au moins un capteur de position mesurant la position du rotor par rapport au stator. L'utilisation de plusieurs capteurs de position permet également de mesurer la position et la vitesse du rotor.

Le dispositif de mesure de position est positionné radialement à l'intérieur du bobinage, et en regard d'une cible en rotation fixée au rotor, de façon à permettre au capteur de position de détecter la cible. Par exemple, le capteur de position peut être un capteur à effet Hall détectant des aimants faisant partie de la cible, ou un capteur optique.

Le dispositif de mesure de position comprend un bras de fixation faisant saillie perpendiculairement par rapport au compartiment de capteur vers l'axe de rotation du rotor.

Le carter de l'unité de stator comprend un palier ou flasque positionné à une extrémité axiale de la machine électrique tournante. Le bras de fixation comprend une portion principale et une portion d'extrémité fixée sur ce palier.

La portion principale comprend un orifice présentant un axe central aligné avec l'axe de rotation du rotor et au travers duquel passe l'arbre du rotor.

Le dispositif de mesure de position est agencé de façon à pouvoir être tourné à l'aide d'un outil de calibrage par rapport au palier et à la cible du rotor autour de l'axe de rotation du rotor, avant sa fixation définitive sur le palier.

Ceci permet de calibrer ou synchroniser manuellement le signal de la cible du rotor avec les capteurs de position. Le dispositif de mesure de position présente des encoches coopérant chacune avec une dent de l'outil de calibrage de sorte que la rotation de l'outil de calibrage entraine la rotation du dispositif de mesure de position afin de corriger la position angulaire du capteur de position par rapport à la cible du rotor.

Toutefois, la conception des dispositifs de mesure de position du document FR3108974 et FR3051999 entraîne des inconvénients, notamment des désaccouplements non souhaités de l'outil de calibrage avec le dispositif de mesure de position lors du calibrage et une perte de précision du calibrage causée par un jeu entre l'outil de calibrage et le dispositif de mesure de position.

### Résumé

Une idée à la base de l'invention est d'améliorer l'accouplement entre le dispositif de mesure de position et l'outil de calibrage afin d'améliorer la précision du positionnement a angulaire du dispositif de mesure de position par rapport à l'unité de stator.

Selon un mode de réalisation, l'invention fournit un dispositif de mesure de position destinée à une machine électrique tournante comportant une unité de stator et un rotor monté en rotation dans et par rapport à l'unité de stator suivant un axe de rotation, le dispositif de mesure de position comprenant un capteur de position destiné à mesurer la position du rotor par rapport à l'unité de stator et logé dans un compartiment de capteur, le dispositif de mesure de position étant destiné à être positionné dans une zone d'extrémité axiale de l'unité de stator de façon à permettre au capteur de position de détecter une cible en rotation reliée au rotor, le dispositif de mesure de position comprenant un bras de fixation faisant saillie par rapport au compartiment de capteur vers l'axe de rotation,
dans lequel le bras de fixation comporte un orifice destiné à recevoir un arbre du rotor et présentant un axe central destiné à être aligné avec l'axe de rotation du rotor,
et dans lequel le bras de fixation comporte au moins une encoche réalisée sur la périphérie de l'orifice, l'encoche présentant une profondeur, dans la direction de l'axe central jusqu'à une paroi de fond, supérieure ou égale à 2 mm, l'encoche étant configurée pour accueillir une dent d'un outil de calibrage.

Grâce à ces caractéristiques, la profondeur de l'encoche du dispositif de mesure de position permet d'améliorer l'accouplement entre le dispositif de mesure de position et l'outil de calibrage ce qui a pour avantage de limiter fortement des désaccouplements inopinés lors du calibrage. En effet, il a été constaté par les inventeurs qu'une encoche ayant une profondeur inférieure ou égale à 1,5 mm ne permettait pas d'avoir un accouplement suffisamment fiable.

Selon des modes de réalisation, un tel dispositif de mesure de position peut comporter une ou plusieurs des caractéristiques suivantes.

Selon un mode de réalisation, l'encoche présente une profondeur comprise entre 2 et 5 mm, par exemple égale à 4 mm.

Selon l'invention, l'encoche comporte deux parois latérales et une paroi radialement externe, les parois latérales étant disposées de manière circonférentielle de part et d'autre de la paroi radialement externe.

Selon l'invention, les parois latérales comportent une première paroi latérale et une deuxième paroi latérale, la première paroi latérale étant formée dans un plan incliné d'un premier angle non nul par rapport à un plan radial passant par l'axe central de l'orifice, la deuxième paroi latérale étant formée dans un plan incliné d'un deuxième angle non nul par rapport à un plan radial passant par l'axe central de l'orifice, le premier angle et le deuxième angle étant opposées, l'inclinaison des parois latérales étant configurée pour que l'encoche ait une dimension circonférentielle se rétrécissant en allant vers la paroi de fond.

Ainsi, l'inclinaison des parois latérales de l'encoche permet de garantir un contact entre l'encoche et la dent de part et d'autre de l'encoche, sans se soucier d'un éventuel jeu, comme lorsque les parois latérales ne sont pas inclinées. Cela permet ainsi d'augmenter la précision du calibrage.

Selon un mode de réalisation, le premier angle et le deuxième angle sont compris en valeur absolue entre 5 et 35°, de préférence entre 5 et 15°, par exemple égal à 10°.

Selon un mode de réalisation, la paroi radialement externe présente la forme d'un secteur angulaire d'un tronc de cône de révolution autour de l'axe central et ayant un demi-angle au sommet non nul, l'inclinaison de la paroi radialement externe étant configurée pour que l'encoche ait une dimension radiale se rétrécissant en allant vers la paroi de fond.

Ainsi, l'inclinaison de la paroi radialement externe, due à la forme tronconique, de l'encoche permet de garantir un contact entre l'encoche et la dent, sans se soucier d'un éventuel jeu, comme lorsque la paroi radialement externe n'est pas inclinée. Cela permet ainsi d'augmenter la précision du calibrage.

Selon un mode de réalisation, le demi-angle au sommet est compris entre 5 et 35°, de préférence entre 5 et 15°, par exemple égal à 10°.

Selon un mode de réalisation, le bras de fixation comporte une pluralité d'encoches, par exemple deux, trois ou quatre.

Selon un mode de réalisation, les encoches sont réparties régulièrement tout autour de la périphérie de l'orifice, par exemple au nombre de trois.

Selon un mode de réalisation, le bras de fixation comporte une portion principale, dans laquelle est réalisée l'orifice, et une portion périphérique située autour de la portion principale et fixée à la portion principale.

Selon un mode de réalisation, le compartiment de capteur et la portion principale du bras de fixation sont réalisés dans un matériau polymère.

Selon un mode de réalisation, la portion périphérique est réalisée en métal.

Selon un mode de réalisation, la portion périphérique comprend une pluralité de trous de fixation, des moyens de fixation étant destinés à traverser les trous de fixations du bras de fixation de sorte à fixer le bras de fixation sur un palier de l'unité de stator.

Selon un mode de réalisation, la portion périphérique est surmoulée dans la portion principale du bras de fixation lors d'une opération de surmoulage de façon à obtenir une portion périphérique intégré à la portion principale.

Ceci permet de simplifier le processus de fabrication du dispositif de mesure de position. Une seule étape de moulage est nécessaire. Il y a moins de pièces à assembler et à gérer.

Selon un mode de réalisation, chaque trou de fixation présente une forme oblongue et incurvée, la courbure des trous de fixation ayant pour centre de courbure l'axe central.

Selon un mode de réalisation, les trous de fixation sont répartis régulièrement tout autour de l'orifice, les trous de fixation étant par exemple au nombre de 3.

Selon un mode de réalisation, chaque encoche débouche radialement dans l'orifice.

Selon un mode de réalisation, l'invention fournit aussi un outil de calibrage destiné à calibrer un dispositif de mesure de position pour unité de stator de machine électrique tournante comprenant un stator dans lequel est disposé un bobinage, la machine électrique tournante comprenant un rotor monté en rotation dans et par rapport à l'unité de stator suivant un axe de rotation,
dans lequel l'outil de calibrage comporte un corps cylindrique de révolution autour d'un axe central présentant à une extrémité au moins une dent, la dent présentant une longueur dans la direction de l'axe central supérieure ou égale à 2 mm, la dent étant configurée pour s'engager dans une encoche d'un dispositif de mesure de position.

Grâce à ces caractéristiques, et de manière analogue à la profondeur de l'encoche, la longueur de la dent de l'outil de calibrage permet d'améliorer l'accouplement entre le dispositif de mesure de position et l'outil de calibrage ce qui a pour avantage de limiter fortement des désaccouplements inopinés lors du calibrage.

Selon un mode de réalisation, la dent présente une longueur comprise entre 2 et 5 mm, par exemple égale à 4 mm.

Selon l'invention, la dent comporte une surface d'extrémité axiale destinée à être en regard d'une paroi de fond d'une encoche de dispositif de mesure de position, une surface radialement externe située dans le prolongement du corps cylindrique, et deux surfaces latérales située de part et d'autre de la surface radialement externe.

Selon l'invention, les surfaces latérales comportent une première surface latérale et une deuxième surface latérale, la première surface latérale étant formée dans un plan incliné d'un premier angle non nul par rapport à un plan radial passant par l'axe central du corps cylindrique, la deuxième surface latérale étant formée dans un plan incliné d'un deuxième angle non nul par rapport à un plan radial passant par l'axe central de l'orifice, le premier angle et le deuxième angle étant opposées, l'inclinaison des surfaces latérales étant configurée pour que la dent ait une dimension circonférentielle se rétrécissant en allant vers la surface d'extrémité axiale.

Selon un mode de réalisation, le premier angle et le deuxième angle sont compris en valeur absolue entre 5 et 35°, de préférence entre 5 et 15°, par exemple égal à 10°.

Selon un mode de réalisation, la surface radialement externe présente la forme d'un secteur angulaire d'un tronc de cône de révolution autour de l'axe central et ayant un demi-angle au sommet non nul, l'inclinaison de la surface radialement externe étant configurée pour que la dent ait une dimension radiale se rétrécissant en allant vers la surface d'extrémité axiale.

Selon un mode de réalisation, le demi-angle au sommet est compris entre 5 et 35°, de préférence entre 5 et 15°, par exemple égal à 10°.

Selon un mode de réalisation, la dent est réalisée à une périphérie de l'extrémité du corps cylindrique.

Selon un mode de réalisation, le bras de fixation comporte une pluralité de dents, par exemple deux, trois ou quatre.

Selon un mode de réalisation, les dents sont réparties régulièrement tout autour d'une périphérie de l'extrémité du corps cylindrique.

Selon un mode de réalisation, l'invention fournit aussi un ensemble comportant un dispositif de mesure de position précité et un outil de calibrage précité.

Selon un mode de réalisation, l'invention fournit aussi une unité de stator de machine électrique tournante comprenant un stator, dans laquelle l'unité de stator comprend un dispositif de mesure de position précité, le dispositif de mesure de position étant positionné dans une zone d'extrémité axiale de l'unité de stator de façon à permettre au capteur de position de détecter une cible en rotation reliée au rotor.

Selon un mode de réalisation, l'invention fournit aussi une machine électrique tournante comprenant une unité de stator précitée, et un rotor monté en rotation dans et par rapport à l'unité de stator suivant l'axe de rotation.

Selon un mode de réalisation, l'invention fournit aussi un procédé de calibrage d'un dispositif de mesure de position dans une machine électrique tournante, dans lequel le procédé comprend les étapes suivantes :
- fournir une machine électrique tournante comprenant une unité de stator, et un rotor monté en rotation dans et par rapport à l'unité de stator suivant un axe de rotation, l'unité de stator comprenant un stator muni d'un bobinage, et un dispositif de mesure de position précité,
- fournir un outil de calibrage précité,
- mettre en position le dispositif de mesure de position dans une zone d'extrémité axiale de l'unité de stator,
- accoupler l'outil de calibrage avec le dispositif de mesure de position en positionnant l'au moins une dent dans l'au moins une encoche,
- calibrer le dispositif de mesure de position avec la cible reliée au rotor à l'aide de l'outil de calibrage,
- fixer le dispositif de mesure de position à l'unité de stator et désaccoupler l'outil de calibrage du dispositif de mesure de position.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 représente une vue en perspective partielle d'une machine électrique tournante comprenant une unité de stator et un dispositif de mesure de position selon un mode de réalisation
[Fig. 2] La figure 2 est une vue en perspective d'un dispositif de mesure de position et d'un outil de calibrage avant accouplement, selon un mode de réalisation.
[Fig. 3] La figure 3 est une vue en coupe selon le plan III de la figure 2 lorsque l'outil de calibrage est accouplé avec le dispositif de mesure de position, selon un premier mode de réalisation.
[Fig. 4] La figure 4 est une vue en coupe selon le plan III de la figure 2 lorsque l'outil de calibrage est accouplé avec le dispositif de mesure de position, selon un deuxième mode de réalisation.
[Fig. 5] La figure 5 est une vue en coupe selon le plan III de la figure 2 lorsque l'outil de calibrage est accouplé avec le dispositif de mesure de position, selon un troisième mode de réalisation.
[Fig. 6] La figure 6 est une vue en coupe selon le plan III de la figure 2 lorsque l'outil de calibrage est accouplé avec le dispositif de mesure de position, selon un quatrième mode de réalisation.

### Description des modes de réalisation

Dans la description et les revendications, on utilisera, les orientations « axiale » et « radiale » pour désigner, selon les définitions données dans la description, des éléments du dispositif de mesure de position et de l'outil de calibrage. Par convention, l'axe central de l'orifice du bras de fixation ou de l'outil de calibrage définit l'orientation « axiale ». L'orientation « radiale » est dirigée orthogonalement à l'axe X et, de l'intérieur vers l'extérieur en s'éloignant dudit axe et l'orientation « circonférentielle » est dirigée orthogonalement à l'axe central et orthogonalement à la direction radiale. Les termes « externe » sont utilisés pour définir la position relative d'un élément par rapport à un autre, par référence à l'axe central, un élément éloigné de l'axe central est ainsi qualifié d'externe par opposition à un élément interne situé radialement plus proche de l'axe central.

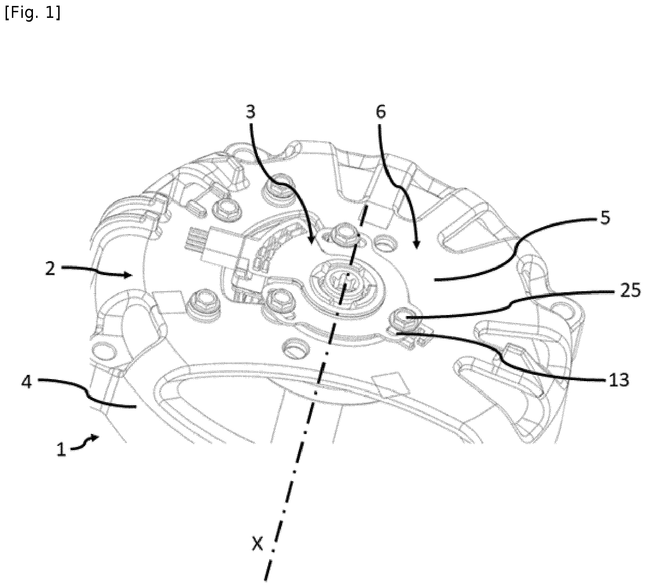

La figure 1 représente une machine électrique tournante 1 comprenant une unité de stator 2 comportant un dispositif de mesure de position 3 selon un mode de réalisation.

La machine électrique tournante 1 peut être par exemple un moteur électrique pour véhicule automobile électrique ou hybride. L'invention s'applique également à d'autres types de machine électrique tournante tel qu'un alternateur ou un alterno-démarreur de véhicule automobile.

L'unité de stator 2 comprend un stator dans lequel est disposé un bobinage. On entend par bobinage, une bobine ou plusieurs bobines, par exemple à base de cuivre. La machine électrique tournante 1 comprend également un rotor monté en rotation par rapport à l'unité de stator 2 suivant un axe de rotation X à l'intérieur du bobinage.

L'unité de stator 2 comprend un carter 4 entourant le stator et le rotor pour les protéger. Le carter 4 comprend au moins un flasque positionné à une extrémité axiale 6 de la machine électrique tournante 1 et qui forme un palier 5 guidant en rotation l'arbre du rotor. Le palier 5 s'étend de manière générale dans un plan perpendiculaire à l'axe de rotation X.

Le dispositif de mesure de position 3 est agencé de façon à pouvoir être tourné par rapport au palier 5 et à la cible du rotor autour de l'axe de rotation X du rotor avant sa fixation définitive sur le palier 5.

Ceci permet de calibrer le signal de la cible du rotor avec les capteurs de position. Cette étape de calibrage est réalisée à l'aide d'un outil de calibrage 7 coopérant avec le dispositif de mesure de position 3 de sorte que la rotation de l'outil de calibrage 7 entraine la rotation du dispositif de mesure de position 3 afin de corriger la position angulaire du capteur de position par rapport à la cible du rotor. En effet, lors du calibrage, le déphasage électrique entre les signaux du capteur de position et les tensions du moteur est mesuré. Le capteur de position est ainsi tourné jusqu'à obtenir le déphasage voulu. Pour le calibrage, le moteur électrique est entrainé en rotation.

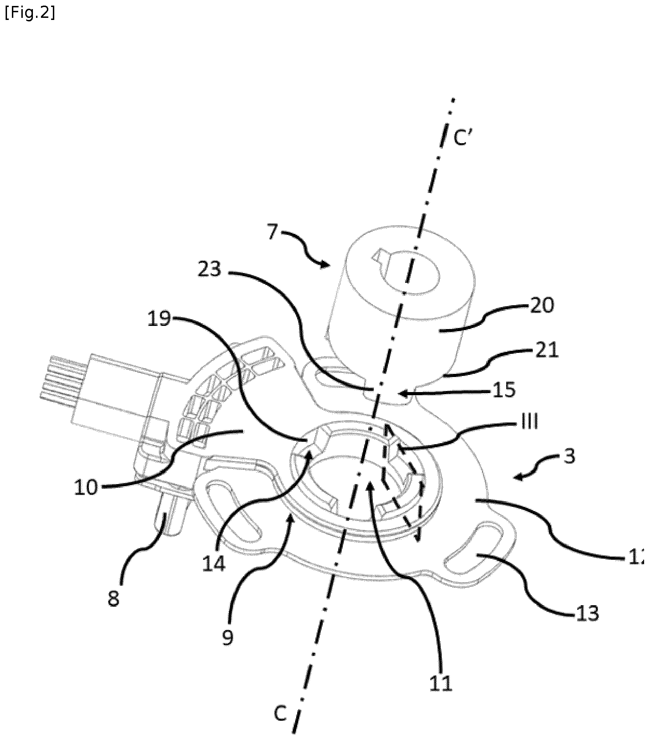

Le dispositif de mesure de position 3 et l'outil de calibrage 7 seront plus particulièrement décrits par la suite au regard notamment des figures 2 à 6.

La figure 2 représente notamment le dispositif de mesure de position 3 et l'outil de calibrage 7 avant leur accouplement, selon un mode de réalisation.

Le dispositif de mesure de position 3 comprend un compartiment de capteur 8 logeant au moins un capteur de position mesurant la position du rotor par rapport à l'unité de stator 2. Le dispositif de mesure de position 3 peut comprendre plusieurs capteurs de position pour mesurer la position et la vitesse du rotor. Les capteurs de position peuvent être des capteurs à effet Hall détectant la position et mesurant la vitesse du rotor au moyen d'aimants faisant partie de la cible fixée au rotor, par exemple. D'autres types de capteur de position peuvent être utilisés comme des capteurs optiques ou des capteurs inductifs.

Le dispositif de mesure de position 3 est positionné au niveau de l'extrémité axiale 6 de l'unité de stator 2 de façon à permettre au capteur de position de détecter une cible en rotation reliée au rotor. Le dispositif de mesure de position 3 est ainsi situé entre le rotor et le palier 5 et radialement à l'intérieur de l'unité de stator 2.

Le dispositif de mesure de position 3 comprend un bras de fixation 9 faisant saillie perpendiculairement du compartiment de capteur 8 vers l'axe de rotation X, comme représenté en figures 1 et 2.

Le bras de fixation 9 comporte en outre une portion principale 10 comprenant un orifice 11 présentant un axe central C destiné à être aligné avec l'axe de rotation X du rotor lorsque le dispositif de mesure de position 3 est monté sur le palier 5. L'orifice 11 est destiné à recevoir l'arbre du rotor.

Le bras de fixation 9 comporte également une portion périphérique 12 située autour de la portion principale 10 et fixée à la portion principale 10. Le compartiment de capteur 8 et la portion principale 10 du bras de fixation 9 sont par exemple réalisés dans un matériau polymère tandis que la portion périphérique 12 est réalisée en métal.

La portion périphérique 12 peut par exemple être surmoulé dans la portion principale 10 lors d'une opération de surmoulage de façon à obtenir une portion périphérique 12 intégré à la portion principale 10.

Comme visible en figure 2, la portion périphérique 12 comprend dans ce mode de réalisation trois trous de fixation 13 répartis régulièrement tout autour de l'orifice 11. Des moyens de fixation, tels que des vis 25, traversent les trous de fixations 13 de sorte à fixer le bras de fixation 9 sur le palier 5 de l'unité de stator 2. Chaque trou de fixation 13 présente une forme oblongue et incurvée dont la courbure a pour centre l'axe central C. La forme des trous de fixation 13 permet d'autoriser la rotation du dispositif de mesure de position 3 lors du calibrage des capteurs de position avec la cible du rotor.

Comme énoncé précédemment, l'étape de calibrage est réalisée à l'aide d'un outil de calibrage 7 coopérant avec le dispositif de mesure de position 3, l'étape de calibrage étant réalisée après la mise en position du dispositif de mesure de position 3 sur l'unité de stator 2 et avant sa fixation définitive.

Cette coopération est réalisée à l'aide d'encoches 14 réalisées sur le dispositif de mesure de position 3 et de dents 15 réalisées sur l'outil de calibrage 7.

En effet, comme représenté sur la figure 2, la portion principale 10 du bras de fixation 9 comporte trois encoches 14 réalisées sur la périphérie de l'orifice 11 et régulièrement réparties autour de celui-ci. Chaque encoche 14 est avantageusement espacée des encoches 14 adjacentes par une protubérance 16 faisant saillie axialement de la portion principale 10. Dans l'exemple représenté, les encoches 14 présentent une profondeur, dans la direction de l'axe central C jusqu'à une paroi de fond 17, égale à environ 4 mm.

Chaque encoche 14 comporte ainsi deux parois latérales 18 et une paroi radialement externe 19. Les parois latérales 18 sont disposées de manière circonférentielle de part et d'autre de la paroi radialement externe 19.

L'outil de calibrage 7 comporte un corps cylindre 20 de révolution autour d'un axe central C', et présentant à une extrémité 21 trois dents 15 réparties régulièrement tout autour de la périphérie de l'extrémité 21. Dans d'autres modes de réalisation non représentés, le nombre de dents 15 et le nombre d'encoches 14 peuvent varier au besoin tant qu'il reste une concordance entre le positionnement des dents 15 avec le positionnement des encoches 14.

De la même manière que pour les encoches 14, dans l'exemple représenté, chaque dent 15 présente une longueur dans la direction de l'axe central C', égale à environ 4 mm. Chaque dent 15 est ainsi configurée pour s'engager dans l'une des encoches 14 du dispositif de mesure de position 3.

Chaque dent 15 comporte une surface d'extrémité axiale 22 située en regard de la paroi de fond 17 d'une encoche 14 lorsque l'outil de calibrage 7 est accouplé avec le dispositif de mesure de position 3. Chaque dent 15 comporte également une surface radialement externe 23 située dans le prolongement du corps cylindrique 20, et deux surface latérales 24 située de part et d'autre de la surface radialement externe 23.

Lors de l'accouplement, chaque surface latérale 24 d'une dent 15 est située en regard d'une paroi latérale 18 d'une encoche 14. De la même manière, la surface radialement externe 23 de la dent 15 est située en regard de la paroi radialement externe 19 de l'encoche 14. Lors de l'accouplement, l'axe central C de l'orifice 11 coïncide avec l'axe central C' du corps cylindrique 20.

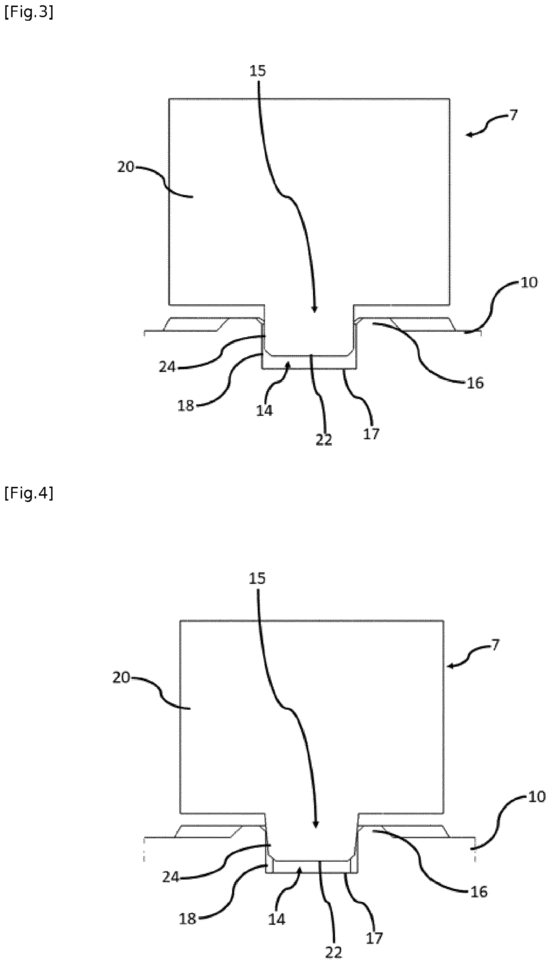

Les figures 3 à 6 montrent différents modes de réalisation du dispositif de mesure de position 3 et de l'outil de calibrage 7, en mettant en évidence l'accouplement entre une dent 15 et une encoche 14.

Dans le mode de réalisation de la figure 3, les parois latérales 18 de l'encoche 14 et les surfaces latérales 24 de la dent 15 sont formés dans des plans radiaux passant par l'axe central C de l'orifice 11 ou par l'axe central C' du corps cylindrique 20 respectivement de sorte que chaque paroi latérale 18 est parallèle à une surface latérale 24. Les parois latérales 18 sont ainsi perpendiculaires à la paroi de fond 17 tandis que les surfaces latérales 24 sont perpendiculaires à la surface d'extrémité axiale 22.

Le mode de réalisation de la figure 4 diffère du mode de réalisation de la figure 3 en ce que les surfaces latérales 24 de la dent 15 sont inclinés d'un angle, de 10° dans l'exemple représenté, par rapport à un plan radial passant par l'axe central C' du corps cylindrique 20. L'inclinaison d'une surface latérale 24 est opposée à l'inclinaison de l'autre surface latérale 24. De plus, l'inclinaison des surfaces latérales 24 est réalisée de sorte que la dent 15 présente une dimension circonférentielle se rétrécissant en allant vers la surface d'extrémité axiale 22. Ainsi, les surfaces latérales 24 présentent un angle de 100° avec la surface d'extrémité axiale 22.

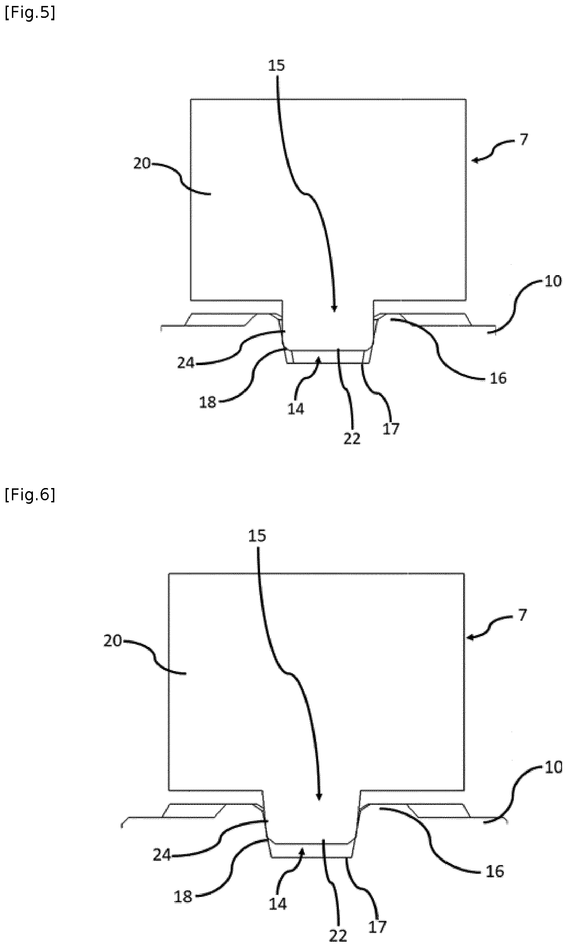

Le mode de réalisation de la figure 5 diffère du mode de réalisation de la figure 3 en ce que les parois latérales 18 de l'encoche 14 sont inclinés d'un angle, de 10° dans l'exemple représenté, par rapport à un plan radial passant par l'axe central C de l'orifice 11. L'inclinaison d'une paroi latérale 18 est opposée à l'inclinaison de l'autre paroi latérale 18. De plus, l'inclinaison des parois latérales 18 est réalisée de sorte que l'encoche 14 présente une dimension circonférentielle se rétrécissant en allant vers la paroi de fond 17. Ainsi, les parois latérales 18 présentent un angle de 100° avec la paroi de fond 17.

Le mode de réalisation de la figure 6 correspond à une combinaison des caractéristiques du mode de réalisation de la figure 4 et de celles du mode de réalisation de la figure 5. En effet, dans ce mode, les parois latérales 18 de l'encoche 14 et les surfaces latérales 24 de la dent 15 sont inclinés d'un angle de 10° dans l'exemple représenté. Ainsi, chaque surface latérale 24 est parallèle à une paroi latérale 18.

L'inclinaison des parois latérales 18 et/ou l'inclinaison des surfaces latérales 24 permet de garantir un contact entre l'encoche 14 et la dent 15 de part et d'autre de l'encoche 14, sans se soucier d'un éventuel jeu. Cela permet ainsi d'augmenter la précision du calibrage.

De plus, avantageusement, la paroi radialement externe 19 présente la forme d'un secteur angulaire d'un tronc de cône de révolution autour de l'axe central C et ayant un demi-angle au sommet non nul, par exemple de 10°. L'inclinaison de la paroi radialement externe19 est réalisée de sorte que l'encoche 14 ait une dimension radiale se rétrécissant en allant vers la paroi de fond 17.

De la même manière, avantageusement, la surface radialement externe 23 présente la forme d'un secteur angulaire d'un tronc de cône de révolution autour de l'axe central C' et ayant un demi-angle au sommet non nul, par exemple de 10°. L'inclinaison de la surface radialement externe 23 est réalisée de sorte que la dent 15 ait une dimension radiale se rétrécissant en allant vers la surface d'extrémité axiale 22.

L'inclinaison de la paroi radialement externe 19 et/ou de la surface radialement externe 23, due à la forme tronconique, de l'encoche 14 et/ou de la dent 15 permet de garantir un contact entre l'encoche 14 et la dent 15, sans se soucier d'un éventuel jeu. Cela permet ainsi d'augmenter la précision du calibrage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications indépendantes.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif de mesure de position (3) destiné à une machine électrique tournante (1) comportant une unité de stator (2) et un rotor monté en rotation dans et par rapport à l'unité de stator (2) suivant un axe de rotation (X), le dispositif de mesure de position (3) comprenant un capteur de position destiné à mesurer la position du rotor par rapport à l'unité de stator (2) et logé dans un compartiment de capteur (8) , le dispositif de mesure de position (3) étant destiné à être positionné dans une zone d'extrémité axiale (6) de l'unité de stator (2) de façon à permettre au capteur de position de détecter une cible en rotation reliée au rotor, le dispositif de mesure de position (3) comprenant un bras de fixation (9) faisant saillie par rapport au compartiment de capteur (8) vers l'axe de rotation (X),
dans lequel le bras de fixation (9) comporte un orifice (11) destiné à recevoir un arbre du rotor et présentant un axe central (C) destiné à être aligné avec l'axe de rotation (X) du rotor,
dans lequel le bras de fixation (9) comporte au moins une encoche (14) réalisées sur la périphérie de l'orifice (11), l'encoche (14) présentant une profondeur, dans la direction de l'axe central jusqu'à une paroi de fond (17), supérieure ou égale à 2 mm, l'encoche (14) étant configurée pour accueillir une dent (15) d'un outil de calibrage (7), et dans lequel l'encoche (14) comporte deux parois latérales (18) et une paroi radialement externe (19), les parois latérales (18) étant disposées de manière circonférentielle de part et d'autre de la paroi radialement externe (19),
les parois latérales (18) comportent une première paroi latérale et une deuxième paroi latérale, la première paroi latérale étant formée dans un plan incliné d'un premier angle non nul par rapport à un plan radial passant par l'axe central de l'orifice (11), la deuxième paroi latérale étant formée dans un plan incliné d'un deuxième angle non nul par rapport à un plan radial passant par l'axe central de l'orifice (11), le premier angle et le deuxième angle étant opposées, l'inclinaison des parois latérales (18) étant configurée pour que l'encoche ait une dimension circonférentielle se rétrécissant en allant vers la paroi de fond (17).

2. Dispositif de mesure de position (3) selon la revendication 1, dans lequel le premier angle et le deuxième angle sont compris en valeur absolue entre 5 et 35°.

3. Dispositif de mesure de position (3) selon l'une des revendications 1 à 2, dans lequel la paroi radialement externe (19) présente la forme d'un secteur angulaire d'un tronc de cône de révolution autour de l'axe central et ayant un demi-angle au sommet non nul, l'inclinaison de la paroi radialement externe (19) étant configurée pour que l'encoche (14) ait une dimension radiale se rétrécissant en allant vers la paroi de fond (17).

4. Dispositif de mesure de position (3) selon l'une des revendications 1 à 3, dans lequel le bras de fixation (9) comporte une portion principale (10), dans laquelle est réalisée l'orifice (11), et une portion périphérique (12) située autour de la portion principale (10) et fixée à la portion principale (10).

5. Outil de calibrage (7) destiné à calibrer un dispositif de mesure de position (3) pour unité de stator (2) de machine électrique tournante (1) comprenant un stator dans lequel est disposé un bobinage, la machine électrique tournante (1) comprenant un rotor monté en rotation dans et par rapport à l'unité de stator (2) suivant un axe de rotation,
dans lequel l'outil de calibrage (7) comporte un corps cylindrique (20) de révolution autour d'un axe central (C') présentant à une extrémité (21) au moins une dent (15), la dent (15) présentant une longueur dans la direction de l'axe central supérieur ou égal à 2 mm, la dent (15) étant configurée pour s'engager dans une encoche d'un dispositif de mesure de position (3),
dans lequel la dent (15) comporte une surface d'extrémité axiale (22) destinée à être en regard d'une paroi de fond (17) d'une encoche de dispositif de mesure de position (3), une surface radialement externe (23) située dans le prolongement du corps cylindrique (20), et deux surfaces latérales (24) située de part et d'autre de la surface radialement externe (23),
et dans lequel les surfaces latérales (24) comportent une première surface latérale et une deuxième surface latérale, la première surface latérale étant formée dans un plan incliné d'un premier angle non nul par rapport à un plan radial passant par l'axe central du corps cylindrique (20), la deuxième surface latérale étant formée dans un plan incliné d'un deuxième angle non nul par rapport à un plan radial passant par l'axe central de l'orifice (11), le premier angle et le deuxième angle étant opposées, l'inclinaison des surfaces latérales (24) étant configurée pour que la dent (15) ait une dimension circonférentielle se rétrécissant en allant vers la surface d'extrémité axiale (22).

6. Outil de calibrage (7) selon la revendication 5, dans lequel le premier angle et le deuxième angle sont compris en valeur absolue entre 5 et 35°.

7. Outil de calibrage (7) selon l'une des revendications 5 à 6, dans lequel la surface radialement externe (23) présente la forme d'un secteur angulaire d'un tronc de cône de révolution autour de l'axe central et ayant un demi-angle au sommet non nul, l'inclinaison de la surface radialement externe (23) étant configurée pour que la dent ait une dimension radiale se rétrécissant en allant vers la surface d'extrémité axiale (22).

8. Outil de calibrage (7) selon l'une des revendications 5 à 7, dans lequel la dent (15) est réalisée à une périphérie de l'extrémité (21) du corps cylindrique (20).

9. Ensemble comportant un dispositif de mesure de position (3) selon l'une des revendications 1 à 4 et un outil de calibrage (7) selon l'une des revendications 5 à 8.

10. Procédé de calibrage (7) d'un dispositif de mesure de position (3) dans une machine électrique tournante (1), dans lequel le procédé comprend les étapes suivantes :
- fournir une machine électrique tournante (1) comprenant une unité de stator (2), et un rotor monté en rotation dans et par rapport à l'unité de stator (2) suivant un axe de rotation, l'unité de stator (2) comprenant un stator muni d'un bobinage, et un dispositif de mesure de position (3) selon l'une des revendications 1 à 4,
- fournir un outil de calibrage (7) selon l'une des revendications 5 à 8,
- mettre en position le dispositif de mesure de position (3) dans une zone d'extrémité axiale (6) de l'unité de stator (2),
- accoupler l'outil de calibrage (7) avec le dispositif de mesure de position (3) en positionnant l'au moins une dent (15) dans l'au moins une encoche (14),
- calibrer le dispositif de mesure de position (3) avec la cible reliée au rotor à l'aide de l'outil de calibrage (7),
- fixer le dispositif de mesure de position (3) à l'unité de stator (2) et désaccoupler l'outil de calibrage (7) du dispositif de mesure de position (3).

## Patentansprüche

1. Positionsmesseinrichtung (3), welche für eine rotierende elektrische Maschine (1) bestimmt ist, die eine Statoreinheit (2) und einen Rotor, der in und bezüglich der Statoreinheit (2) um eine Drehachse (X) drehbar gelagert ist, umfasst, wobei die Positionsmesseinrichtung (3) einen Positionssensor umfasst, der dazu bestimmt ist, die Position des Rotors bezüglich der Statoreinheit (2) zu messen, und in einem Sensorraum (8) aufgenommen ist, wobei die Positionsmesseinrichtung (3) dazu bestimmt ist, in einem axialen Endbereich (6) der Statoreinheit (2) positioniert zu werden, um dem Positionssensor zu ermöglichen, ein mit dem Rotor verbundenes rotierendes Ziel zu detektieren, wobei die Positionsmesseinrichtung (3) einen Befestigungsarm (9) umfasst, der bezüglich des Sensorraumes (8) zur Drehachse (X) hin vorsteht,
wobei der Befestigungsarm (9) eine Öffnung (11) umfasst, die dazu bestimmt ist, eine Welle des Rotors aufzunehmen, und eine Mittelachse (C) aufweist, die dazu bestimmt ist, mit der Drehachse (X) des Rotors ausgerichtet zu werden, wobei der Befestigungsarm (9) mindestens eine am Umfang der Öffnung (11) hergestellte Aussparung (14) umfasst, wobei die Aussparung (14) in der Richtung der Mittelachse eine Tiefe bis zu einer Bodenwand (17) aufweist, die größer oder gleich 2 mm ist, wobei die Aussparung (14) dafür ausgelegt ist, einen Zahn (15) eines Kalibrierwerkzeugs (7) aufzunehmen, und wobei die Aussparung (14) zwei Seitenwände (18) und eine radial äußere Wand (19) aufweist, wobei die Seitenwände (18) in Umfangsrichtung beiderseits der radial äußeren Wand (19) angeordnet sind,
wobei die Seitenwände (18) eine erste Seitenwand und eine zweite Seitenwand umfassen, wobei die erste Seitenwand in einer Ebene ausgebildet ist, die bezüglich einer durch die Mittelachse der Öffnung (11) verlaufenden radialen Ebene um einen von null verschiedenen ersten Winkel geneigt ist, wobei die zweite Seitenwand in einer Ebene ausgebildet ist, die bezüglich einer durch die Mittelachse der Öffnung (11) verlaufenden radialen Ebene um einen von null verschiedenen zweiten Winkel geneigt ist, wobei der erste Winkel und der zweite Winkel entgegengesetzt sind, wobei die Neigung der Seitenwände (18) so gestaltet ist, dass die Aussparung eine Abmessung in Umfangsrichtung aufweist, die sich zur Bodenwand (17) hin verkleinert.

2. Positionsmesseinrichtung (3) nach Anspruch 1, wobei der erste Winkel und der zweite Winkel dem absoluten Betrag nach zwischen 5 und 35° liegen.

3. Positionsmesseinrichtung (3) nach einem der Ansprüche 1 bis 2, wobei die radial äußere Wand (19) die Form eines Winkelsektors eines Kegelstumpfes aufweist, der rotationssymmetrisch um die Mittelachse ist und einen von null verschiedenen Halbwinkel an der Spitze aufweist, wobei die Neigung der radial äußeren Wand (19) so gestaltet ist, dass die Aussparung (14) eine radiale Abmessung aufweist, die sich zur Bodenwand (17) hin verkleinert.

4. Positionsmesseinrichtung (3) nach einem der Ansprüche 1 bis 3, wobei der Befestigungsarm (9) einen Hauptabschnitt (10), in dem die Öffnung (11) hergestellt ist, und einen Umfangsabschnitt (12), der sich um den Hauptabschnitt (10) herum befindet und am Hauptabschnitt (10) befestigt ist, umfasst.

5. Kalibrierwerkzeug (7), welches dazu bestimmt ist, eine Positionsmesseinrichtung (3) für eine Statoreinheit (2) einer rotierenden elektrischen Maschine (1) zu kalibrieren, die einen Stator umfasst, in dem eine Wicklung angeordnet ist, wobei die rotierende elektrische Maschine (1) einen Rotor umfasst, der in und bezüglich der Statoreinheit (2) um eine Drehachse drehbar gelagert ist,
wobei das Kalibrierwerkzeug (7) einen um eine Mittelachse (C') rotationssymmetrischen zylindrischen Körper (20) umfasst, der an einem Ende (21) mindestens einen Zahn (15) aufweist, wobei der Zahn (15) eine Länge in der Richtung der Mittelachse aufweist, die größer oder gleich 2 mm ist, wobei der Zahn (15) dafür ausgelegt ist, in eine Aussparung einer Positionsmesseinrichtung (3) einzugreifen,
wobei der Zahn (15) eine axiale Endfläche (22), die dazu bestimmt ist, sich gegenüber einer Bodenwand (17) einer Aussparung der Positionsmesseinrichtung (3) zu befinden, eine radial äußere Fläche (23), die sich in der Verlängerung des zylindrischen Körpers (20) befindet, und zwei Seitenflächen (24), die sich beiderseits der radial äußeren Fläche (23) befinden, aufweist,
und wobei die Seitenflächen (24) eine erste Seitenfläche und eine zweite Seitenfläche umfassen, wobei die erste Seitenfläche in einer Ebene ausgebildet ist, die bezüglich einer durch die Mittelachse des zylindrischen Körpers (20) verlaufenden radialen Ebene um einen von null verschiedenen ersten Winkel geneigt ist, wobei die zweite Seitenfläche in einer Ebene ausgebildet ist, die bezüglich einer durch die Mittelachse der Öffnung (11) verlaufenden radialen Ebene um einen von null verschiedenen zweiten Winkel geneigt ist, wobei der erste Winkel und der zweite Winkel entgegengesetzt sind, wobei die Neigung der Seitenflächen (24) so gestaltet ist, dass der Zahn (15) eine Abmessung in Umfangsrichtung aufweist, die sich zur axialen Endfläche (22) hin verkleinert.

6. Kalibrierwerkzeug (7) nach Anspruch 5, wobei der erste Winkel und der zweite Winkel dem absoluten Betrag nach zwischen 5 und 35° liegen.

7. Kalibrierwerkzeug (7) nach einem der Ansprüche 5 bis 6, wobei die radial äußere Fläche (23) die Form eines Winkelsektors eines Kegelstumpfes aufweist, der rotationssymmetrisch um die Mittelachse ist und einen von null verschiedenen Halbwinkel an der Spitze aufweist, wobei die Neigung der radial äußeren Fläche (23) so gestaltet ist, dass der Zahn eine radiale Abmessung aufweist, die sich zur axialen Endfläche (22) hin verkleinert.

8. Kalibrierwerkzeug (7) nach einem der Ansprüche 5 bis 7, wobei der Zahn (15) an einem Umfang des Endes (21) des zylindrischen Körpers (20) hergestellt ist.

9. Anordnung, welche eine Positionsmesseinrichtung (3) nach einem der Ansprüche 1 bis 4 und ein Kalibrierwerkzeug (7) nach einem der Ansprüche 5 bis 8 umfasst.

10. Verfahren zur Kalibrierung (7) einer Positionsmesseinrichtung (3) in einer rotierenden elektrischen Maschine (1), wobei das Verfahren die folgenden Schritte umfasst:
- Bereitstellen einer rotierenden elektrischen Maschine (1), die eine Statoreinheit (2) und einen Rotor, der in und bezüglich der Statoreinheit (2) um eine Drehachse drehbar gelagert ist, umfasst, wobei die Statoreinheit (2) einen mit einer Wicklung ausgestatteten Stator umfasst, und einer Positionsmesseinrichtung (3) nach einem der Ansprüche 1 bis 4,
- Bereitstellen eines Kalibrierwerkzeugs (7) nach einem der Ansprüche 5 bis 8,
- Bringen der Positionsmesseinrichtung (3) in Position in einem axialen Endbereich (6) der Statoreinheit (2),
- Koppeln des Kalibrierwerkzeugs (7) mit der Positionsmesseinrichtung (3) durch Positionieren des mindestens einen Zahns (15) in der mindestens einen Aussparung (14),
- Kalibrieren der Positionsmesseinrichtung (3) mit dem Ziel, das mit dem Rotor verbunden ist, mithilfe des Kalibrierwerkzeugs (7),
- Befestigen der Positionsmesseinrichtung (3) an der Statoreinheit (2) und Entkoppeln des Kalibrierwerkzeugs (7) von der Positionsmesseinrichtung (3).

## Claims

1. Position measuring device (3) intended for a rotary electric machine (1) having a stator unit (2) and a rotor mounted so as to rotate in and with respect to the stator unit (2) about an axis of rotation (X), the position measuring device (3) comprising a position sensor that is intended to measure the position of the rotor with respect to the stator unit (2) and is housed in a sensor compartment (8), the position measuring device (3) being intended to be positioned in an axial end zone (6) of the stator unit (2) so as to allow the position sensor to detect a rotating target connected to the rotor, the position measuring device (3) comprising a fixing arm (9) projecting towards the axis of rotation (X) with respect to the sensor compartment (8),
wherein the fixing arm (9) has an orifice (11) that is intended to receive a shaft of the rotor and has a central axis (C) intended to be aligned with the axis of rotation (X) of the rotor,
wherein the fixing arm (9) has at least one slot (14) formed in the periphery of the orifice (11), the slot (14) having a depth, in the direction of the central axis and as far as a bottom wall (17), of greater than or equal to 2 mm, the slot (14) being configured to receive a tooth (15) of a calibration tool (7), and wherein the slot (14) has two lateral walls (18) and a radially external wall (19), the lateral walls (18) being arranged circumferentially on either side of the radially external wall (19),
the lateral walls (18) have a first lateral wall and a second lateral wall, the first lateral wall being formed in a plane inclined at a first non-zero angle with respect to a radial plane passing through the central axis of the orifice (11), the second lateral wall being formed in a plane inclined at a second non-zero angle with respect to a radial plane passing through the central axis of the orifice (11), the first angle and the second angle being opposite one another, the inclination of the lateral walls (18) being configured such that the slot has a circumferential dimension that narrows towards the bottom wall (17).

2. Position measuring device (3) according to Claim 1, wherein the first angle and the second angle are, in terms of absolute value, between 5 and 35°.

3. Position measuring device (3) according to either of Claims 1 and 2, wherein the radially external wall (19) has the shape of an angular sector of a cone frustum exhibiting symmetry of revolution about the central axis and having a non-zero vertex half-angle, the inclination of the radially external wall (19) being configured such that the slot (14) has a radial dimension that narrows towards the bottom wall (17).

4. Position measuring device (3) according to one of Claims 1 to 3, wherein the fixing arm (9) has a main portion (10) in which the orifice (11) is formed, and a peripheral portion (12) that is situated around the main portion (10) and fixed to the main portion (10).

5. Calibration tool (7) intended to calibrate a position measuring device (3) for a rotary electric machine (1) stator unit (2) comprising a stator in which a winding is arranged, the rotary electric machine (1) comprising a rotor mounted so as to rotate in and with respect to the stator unit (2) about an axis of rotation, wherein the calibration tool (7) has a cylindrical body (20) exhibiting symmetry of revolution about a central axis (C') and having at least one tooth (15) at one end (21), the tooth (15) having a length, in the direction of the central axis, of greater than or equal to 2 mm, the tooth (15) being configured to fit in a slot of a position measuring device (3),
wherein the tooth (15) has an axial end surface (22) intended to face a bottom wall (17) of a slot in the position measuring device (3), a radially external surface (23) situated in the continuation of the cylindrical body (20), and two lateral surfaces (24) situated on either side of the radially external surface (23),
and wherein the lateral surfaces (24) have a first lateral surface and a second lateral surface, the first lateral surface being formed in a plane inclined at a first non-zero angle with respect to a radial plane passing through the central axis of the cylindrical body (20), the second lateral surface being formed in a plane inclined at a second non-zero angle with respect to a radial plane passing through the central axis of the orifice (11), the first angle and the second angle being opposite one another, the inclination of the lateral surfaces (24) being configured such that the tooth (15) has a circumferential dimension that narrows towards the axial end surface (22).

6. Calibration tool (7) according to Claim 5, wherein the first angle and the second angle are, in terms of absolute value, between 5 and 35°.

7. Calibration tool (7) according to either of Claims 5 and 6, wherein the radially external surface (23) has the shape of an angular sector of a cone frustum exhibiting symmetry of revolution about the central axis and having a non-zero vertex half-angle, the inclination of the radially external surface (23) being configured such that the tooth has a radial dimension that narrows towards the axial end surface (22).

8. Calibration tool (7) according to one of Claims 5 to 7, wherein the tooth (15) is formed at a periphery of the end (21) of the cylindrical body (20).

9. Assembly having a position measuring device (3) according to one of Claims 1 to 4 and a calibration tool (7) according to one of Claims 5 to 8.

10. Method for calibrating (7) a position measuring device (3) in a rotary electric machine (1), wherein the method comprises the following steps:
- providing a rotary electric machine (1) comprising a stator unit (2), and a rotor mounted so as to rotate in and with respect to the stator unit (2) about an axis of rotation, the stator unit (2) comprising a stator provided with a winding, and a position measuring device (3) according to one of Claims 1 to 4,
- providing a calibration tool (7) according to one of Claims 5 to 8,
- positioning the position measuring device (3) in an axial end zone (6) of the stator unit (2),
- coupling the calibration tool (7) to the position measuring device (3) by positioning the at least one tooth (15) in the at least one slot (14),
- calibrating the position measuring device (3) with the target connected to the rotor with the aid of the calibration tool (7),
- fixing the position measuring device (3) to the stator unit (2) and uncoupling the calibration tool (7) from the position measuring device (3).
